# EUROPEAN PATENT APPLICATION

(11) **EP 4 787 214 A1**
(43) Date of publication of application: **05.08.2026**
(21) Application number: 26154943.0
(22) Date of filing: 29.01.2026
(51) Int. Cl.: G06F 21/85, G06F 3/023, G06F 13/10, G09G 5/00

(54) **SECURE VIDEO SIGNAL TRANSMISSION AND SWITCHING**

(30) Priority: 29.01.2025 US 202563751046 P
(71) Applicant: FIBERNET LTD., 2069206 Yokneam Illit (IL)
(72) Inventor: SABAG, Naftali, 3460847 Haifa (IL)
(74) Representative: Boult Wade Tennant LLP

(57) **Abstract**

A secure KVM configured to connect to USB-C ports of two or more host computers and to a user console comprising a display and control peripherals; wherein a controller of the KVM device is configured to identify the operational attributes of the display and control peripherals; initiate control of a selected host computer; perform a configuration process of a USB-C connection with the selected host computer based on the identified operational attributes of the display and control peripheral; transmit control commands received from the control peripherals to the selected host computer over the USB-C connection, while enforcing unidirectionality which prevents transmission of data from the selected host computer to the control peripherals; and transmit a video signal received from the selected host computer via the USB-C connection to the display, while enforcing unidirectionality which prevents transmission of data from the display to the selected host computer.

## Description

### CROSS-REFERENCE TO RELATED APPLICATIONS

This application claims the benefit of priority from U.S. Provisional Patent Application No. 63/751,046, filed January 29, 2025, entitled "SECURE VIDEO SIGNAL TRANSMISSION AND SWITCHING," the contents of which are all incorporated by reference as if fully set forth herein in their entirety.

### FIELD OF THE INVENTION

The present invention relates to secure video signal transmission and switching.

### BACKGROUND OF THE INVENTION

A keyboard, video and mouse (KVM) switch is a hardware device which allows a user to control two or more host computers from a single user console comprising a display monitor and computer peripherals (e.g., keyboard mouse).

However, this capability can raise security challenges, because shared displays and peripherals may be targets for malicious attacks which attempt to cause data leakage between different host computers controlled via the single user console comprising keyboard, mouse and display.

One possible solution is to enforce unidirectionality of data transmission between the user console and each of the host computers, thus minimizing the risk of data leakage between different host computers. However, one of the challenges is the fact that different display monitors may require different video transmission settings to enable optimal operation of the display when connected to different host computers. Thus, connecting a display to a host computer typically requires transmitting EDID settings data in the opposite direction to the video stream, i.e., from the display to the computer, to enable the host computer to adjust its video stream output to the monitor's settings. The transmission of EDID settings tables from the display monitor to the host computer thus requires at least some bi-directional data transmission between the shared user console and the multiple host computers.

This reality presents a risk in that a connected host computer may be hacked and used to transmit malicious code through the bi-directional EDID data line back to the shared display. Then, when the display is switched to another host computer, the data that was maliciously stored on the display may be transferred to a another host computer.

USB Type-C, also referred to as USB-C, is a hardware interface for Universal Serial Bus (USB). On its exterior, the upper side and lower side are identical, so the user can plug the connector into a receiving slot in either direction. Compared to previous USB standards, in addition to faster data transmission, USB-C can also support DisplayPort or similar video protocols, for connecting to high definition display screens and high quality audio speakers, to output high quality video and audio signals. Because a single USB-C cable can transmit both data and video and audio signals, and the transmission speed and quality are both superior to previous standards, USB-C related applications are being rapidly developed in relevant industries.

The foregoing examples of the related art and limitations related therewith are intended to be illustrative and not exclusive. Other limitations of the related art will become apparent to those of skill in the art upon a reading of the specification and a study of the figures.

### SUMMARY OF THE INVENTION

The following embodiments and aspects thereof are described and illustrated in conjunction with systems, tools and methods which are meant to be exemplary and illustrative, not limiting in scope.

There is provided, in an embodiment, a secure KVM device, comprising: two or more USB-C interfaces configured to connect to respective USB-C ports of two or more host computers; a device interface configured to connect to a user console comprising a display and control peripherals; and a controller, wherein the controller is configured to identify the operational attributes of the display and control peripherals, wherein the controller is configured to initiate, based on user selection, control by the user console of a selected host computer of the two or more host computers, wherein the controller is configured to perform a configuration process of a USB-C connection with the selected host computer, to determine operational parameters of the USB-C connection, based, at least in part, on the identified operational attributes of the display and control peripherals, wherein based, at least in part, on the configuration process, the KVM device is configured to transmit control commands received from the control peripherals via the device interface, to the selected host computer over the USB-C connection, while enforcing unidirectionality which prevents transmission of data from the selected host computer to the control peripherals, and wherein based, at least in part, on the configuration process, the KVM device is configured to transmit a video signal received from the selected host computer via the USB-C connection, to the display via the device interface, while enforcing unidirectionality which prevents transmission of data from the display to the selected host computer.

In some embodiments, the KVM device is configured to simulate the display and control peripherals to the selected host computer, based, at least in part, on the identified operational attributes of the display and control peripherals.

In some embodiments, the configuration process of the USB-C connection configures the USB-C connection to handle at least the following protocols simultaneously: (i) DisplayPort Alt Mode protocol for the transmitting of the video signal from the selected host computer to the display, and (ii) USB data channels for the transmitting of the control commands from the control peripherals to the selected host computer.

In some embodiments, the configuration process of the USB-C connection comprises at least: (i) connection detection and determination of USB-C connector orientation, (ii) power delivery protocol negotiation with respect to power requirements, and (iii) USB-C Alternate Mode negotiation including DisplayPort settings and data lanes configuration.

In some embodiments, the DisplayPort settings comprise Extended Display Identification Data (EDID) information of the display, comprising resolution, refresh rates, color depth, and/or supported timing.

In some embodiments, the control peripherals comprise at least a keyboard and a pointing device.

In some embodiments, the KVM device further comprises a memory storage, wherein the controller is configured to store the identified operational attributes of the display and control peripherals in the memory storage.

In some embodiments, the user console further comprises an audio device, wherein the KVM device is configured to transmit an audio signal received from the selected host computer over the USB-C connection, to the audio device via the device interface, while enforcing unidirectionality which prevents transmission of data from the audio device to the selected host computer.

In some embodiments, the device interface comprises at least a video interface and one control peripheral interface.

In some embodiments, the user console is connected to the KVM device via an extender comprising a downstream data channel for the video signal and an upstream data channel for the control commands.

There is also provided, in an embodiment, a method comprising: providing a secure KVM device comprising two or more USB-C interfaces configured to connect to respective USB-C ports of two or more host computers, a device interface configured to connect to a user console comprising a display and control peripherals, and a controller; connecting the two or more USB-C interfaces to the respective USB-C ports of the two or more host computers; connecting the user console to the device interface; identifying, by the controller, operational attributes of the display and control peripherals; initiating, by the controller, based on user selection, control by the user console of a selected host computer of the two or more host computers; performing, by the controller, a configuration process of a USB-C connection with the selected host computer, to determine operational parameters of the USB-C connection, based, at least in part, on the identified operational attributes of the display and control peripherals; transmitting by the KVM device control commands received from the control peripherals via the device interface, to the selected host computer over the USB-C connection, while enforcing unidirectionality which prevents transmission of data from the selected host computer to the control peripherals; and transmitting by the KVM device a video signal received from the selected host computer via the USB-C connection, to the display via the device interface, while enforcing unidirectionality which prevents transmission of data from the display to the selected host computer.

In some embodiments, the KVM device is configured to simulate the display and control peripherals to the selected host computer, based, at least in part, on the identified operational attributes of the display and control peripherals.

In some embodiments, the configuration process of the USB-C connection configures the USB-C connection to handle at least the following protocols simultaneously: (i) DisplayPort Alt Mode protocol for the transmitting of the video signal from the selected host computer to the display, and (ii) USB data channels for the transmitting of the control commands from the control peripherals to the selected host computer.

In some embodiments, the configuration process of the USB-C connection comprises at least: (i) connection detection and determination of USB-C connector orientation, (ii) power delivery protocol negotiation with respect to power requirements, and (iii) USB-C Alternate Mode negotiation including DisplayPort settings and data lanes configuration.

In some embodiments, the DisplayPort settings comprise Extended Display Identification Data (EDID) information of the display, comprising resolution, refresh rates, color depth, and/or supported timing.

In some embodiments, the control peripherals comprise at least a keyboard and a pointing device.

In some embodiments, the KVM device further comprises a memory storage, and the method further comprises storing, buy the controller, the identified operational attributes of the display and control peripherals in the memory storage.

In some embodiments, the user console further comprises an audio device, and the method further comprises transmitting by the KVM device an audio signal received from the selected host computer over the USB-C connection, to the audio device via the device interface, while enforcing unidirectionality which prevents transmission of data from the audio device to the selected host computer.

In some embodiments, the device interface comprises at least a video interface and one control peripheral interface, the method further comprising connecting the display to the video interface and connecting at least a first one of the control peripherals to the control peripheral interface.

In some embodiments, the user console is connected to the KVM device via an extender comprising a downstream data channel for the video signal and an upstream data channel for the control commands, and the method further comprises connecting the display and the control peripherals to the extender.

In addition to the exemplary aspects and embodiments described above, further aspects and embodiments will become apparent by reference to the figures and by study of the following detailed description.

### BRIEF DESCRIPTION OF THE DRAWINGS

The present invention will be understood and appreciated more comprehensively from the following detailed description taken in conjunction with the appended drawings in which:
FIG. 1 shows a typical bi-directional video data connection between a video source and a display device.
FIG. 2 schematically illustrates an exemplary secure video/audio transmission device according to the present invention, for secure high-speed video and audio data transmission from a source device (such as a host computer) via a USB-C connection, to a sink device (such as a display device) via a video interface connection.
FIG. 3A-3C are block diagrams of several embodiments of a secure video/audio transmission device, according to some embodiments of the present disclosure.
FIG. 4 illustrates the functional steps in a method for secure transmission of video between a source and one or more display devices over USB-C protocol, according to some embodiments of the present disclosure.
FIGS. 5A-5B are block diagrams of several embodiments of a secure KVM switch, according to some embodiments of the present disclosure.
FIG. 6 illustrates the functional steps in a method for securely selectively controlling two or more host computers from a single user console comprising a keyboard, a pointing device (e.g., a mouse), and a display device (e.g., a display monitor).

### DETAILED DESCRIPTION OF THE INVENTION

In a first aspect of the present invention, disclosed are devices and methods for secure transmission of video and/or audio from a source, such as a host computer, to one or more sink devices, such as a display device (a computer monitor, a video projector, a digital television), or an audio device (speakers, headphones).

As used herein, the term "sink" (also called a data sink, audio sink, video sink, or similar) is a general term in technology and computing that refers to a device or component that mainly receives or consumes data, as opposed to a source device that generates or sends it. Within the context of the present disclosure, a sink device is any device configured for receiving video and/or audio data stream from a source device. Sink devices include, but are not limited to, display monitors, mobile devices, smartphones, laptops, tablets, notebook computers, speakers, headphones, and the like.

In some embodiments, the present invention provides for a secure video/audio transmission device configured to be coupled via a USB-C interface between a source device and one or more sink devices. The source device can be, e.g., a host computer, and the one or more sink devices, can be, e.g., a display monitor of speakers. The secure video/audio transmission device comprises a USB Type-C (also referred to as USB-C) input connection or interface, and one or more device interfaces, such as audio and video interfaces. The device is coupled to the source device through the USB-C interface, and to the one or more sink devices through the device interfaces.

In some embodiments, the present device provides for secure transmission of video and/or audio data from a source device to one or more sink devices, while enforcing unidirectionality of data which prevents transmission of data back, from the one or more sink devices to the source device.

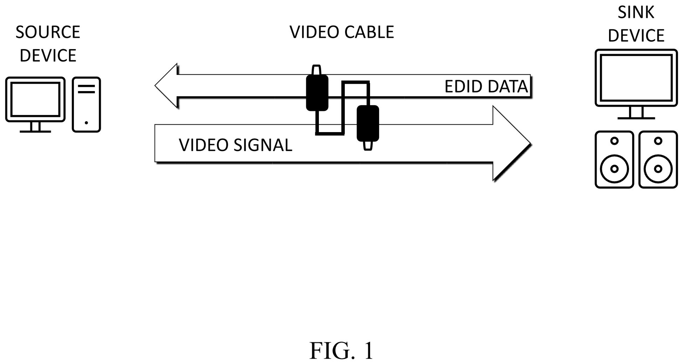

By way of background, in a typical video data connection, a connecting cable (e.g., S-Video, component video, VGA, DVI, HDMI, DisplayPort, Thunderbolt, or the like) between a source and a display device permits bi-directional transmission of data. Thus, video data may be transmitted from the source device to the display, while other data, such as display settings information, may be transmitted back to the source device from the display. Such an arrangement is shown in FIG. 1. In this arrangement, a source device (e.g., a computer as shown) is connected directly to a sink device (display) via a connecting cable. Video data is transmitted to the display, while settings data (using, e.g., the EDID format) is transmitted to the source device. This allows the source device to directly read the display's EDID and adjust parameters of the video transmission accordingly.

As noted above, allowing bi-directional data transmission between a source and a display presents a security risk. For example, a malicious code planted in the display can be transmitted back to the source device and infect it and potentially other devices in a network to which it is connected. To overcome this risk, it is possible to enforce complete unidirectionality of data transmission (i.e., only allowing transmission of video data from source to display) and/or to disconnect some of the lines (such as specified dedicated pins in an HDMI interface) transmitting information back to the source device. However, although this may be advantageous from a security perspective, it may cause operational problems with modern computers and software. Modern computer operating systems and display card drivers typically adjust display resolution to default settings if no display EDID is detected. In some cases, computers may even fail to generate video signals at all.

Similarly, in a typical audio data connection, hardware which is configured to be an audio sink device (such as, for example, loudspeakers, headsets, headphones) may be operated as a microphone and used for eavesdropping purposes. A security issue may arise, for example, when a system is infected with malicious code planted by a hostile entity. Such malicious code may be configured to eavesdrop on the surrounding area of the system, e.g., by monitoring the signal carried back by the audio sink device into an audio device interface. In another example, the malicious code may reconfigure, for example, an audio device interface to which an audio sink is coupled, to operate as a line-in port, wherein the sink device acts as a microphone to eavesdrop on the surrounding area of the system.

As noted above, the USB-C communication protocol allows the transfer of video, audio, data and power over a single cable between devices. USB-C Alt Mode for video and audio allows a USB-C port to transmit DisplayPort, Thunderbolt, HDMI, or other video signals directly through the USB-C cable, alongside or instead of USB data. This can be performed by dynamically reconfiguring some or all of the USB-C four high-speed differential pair data channels to carry video protocol signals. For example, two channels high-speed data channels can be allocated for video and the other two for USB data, to allow for simultaneous video and high-speed data transmission. Alternatively, all four high-speed data channels can be dedicated to DisplayPort, to provide for maximum video bandwidth alongside slower USB data transmission. The USB-C port detects when an Alt Mode-capable device connects and negotiates which mode to use through the USB Power Delivery (USB-PD) protocol. Audio can be embedded within the DisplayPort stream, wherein the video source encodes audio packets into the DisplayPort data stream, and the sink device (monitor, TV, dock) extracts and outputs the audio. Alternatively, audio signal can be transmitted alongside the main video (which may also carry embedded audio) and data paths, using the USB-C also has two sideband use (SBU) pins that can carry analog audio signals. This can implement a dedicated analog audio path separate from the digital Alt Mode traffic.

Handling of display monitor settings data (EDID) in USB-C Alt Mode essentially works similarly to traditional direct video connection. Thus, when a display is connected, the source device queries the sink device's capabilities via a dedicated bi-directional channel ( such as the DisplayPort AUX channel), to retrieve the EDID data, including supported resolutions and refresh rates, color depth capabilities, audio formats, and timing parameters. However, this can create a bi-directional data path that can pose security risks, where a display can send data back to the computer via the USB-C connection.

Accordingly, in some embodiments, the present secure video/audio transmission device provides for EDID interception and emulation, wherein any return data path between the source and the sink is eliminated, and only essential handshaking signals are emulated by the present device with respect to the source. This blocks any pass-through or direct communications from the sink device back to the source device, eliminates potential firmware exploits via display communication, and prevents any inadvertent data transmission back through the video interface. In some embodiments, the present device comprises a unidirectional component or circuit (e.g., a diode, or a fiber-optic connection) configured to enforce unidirectionality of data transmission only from the source to the sink device. In some embodiments, the present device provides for EDID emulation using a firmware solution which caches an EDID profile receives from the sink and provides a corresponding emulated EDID to source. In other cases, the present device may provide for stored pre-programmed EDID display settings.

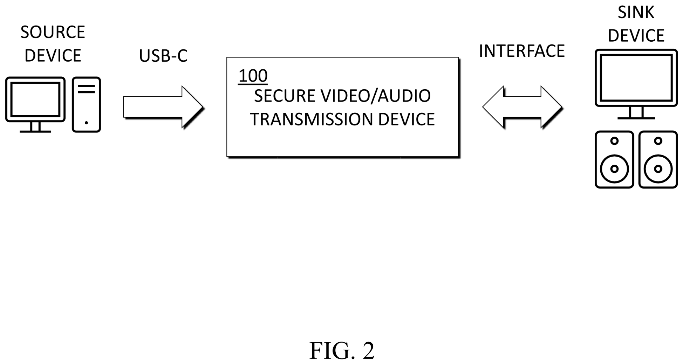

FIG. 2 schematically illustrates an exemplary secure video/audio transmission device **100** according to the present invention. In some embodiments, device **100** provides for secure high-speed video and audio data transmission from a source (such as a host computer) via a USB-C connection, to a sink (such as a display device and/or speakers). In some embodiments, device **100** provides for secure transmission of video/audio from a source to one or more sink devices, while enforcing unidirectionality of data which prevents transmission of data back, from the one or more sink devices to the source device.

In some embodiments, device **100** provides for transmission of high-quality video signals unidirectionally from the source to the sink using the DisplayPort protocol carried over USB-C. This ensures low-latency, high-bandwidth transmission without compression or degradation. In some embodiments, device **100** provides for ensuring that video data (as well as any embedded audio) can only move from source to sink, while no reverse path exists for video or other signals to transmit from the sink to the source, thereby preventing the display from sending back any data or exploits.

In some embodiments, device **100** is capable of detecting EDID settings of the source, and communicating the EDID settings to the source (host computer). EDID is a data structure provided by a display device to describe its capabilities, including supported resolutions, refresh rates, color formats, audio features, and timing parameters.

Typically, the host computer queries the display for this data via the DDC (Display Data Channel) over the video cable. However, in the present case, device **100** acts as an intermediary between the host computer and display, which stores on an onboard memory common EDID profiles. The memory of device **100** can store default EDID settings, captured EDID data from an actual display, or custom-programmed settings.

Device **100** then intercepts the EDID query from the host, and responds with EDID data from its memory storage, to emulate the expected response from the display. Thus, for example, upon initial connection, device **100** may read the EDID from the display via the HDMI or equivalent connection. In some embodiments, this process may be a one-time EDID capture process performed upon initial connection. In some embodiments, device **100** may include a physical user-operated button configured to initiate the one-time acquisition of the EDID. Device **100** then parses and validates the EDID data and stores in in memory. When queried by a host computer, device **100** emulates the EDID data to the host computer. This allows the host computer to configure the video output optimally without direct, ongoing access to the EDID channel of the display. In some embodiments, after the initial EDID capture, the relevant connection pins may be disconnected or isolated, to prevent further reads or writes.

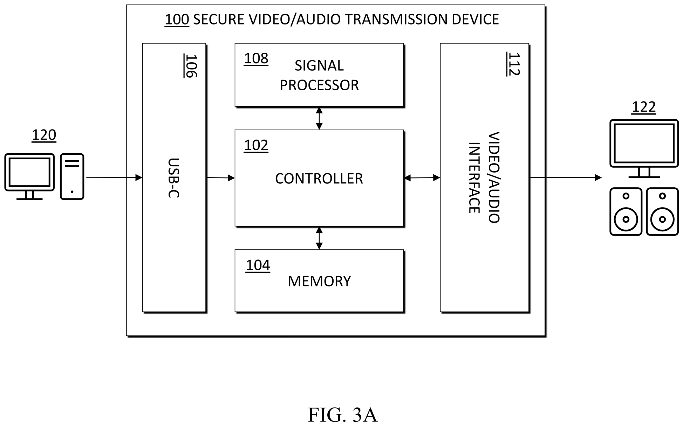

FIG. 3A is a block diagram of an exemplary secure video/audio transmission device **100.** As shown in FIG. 3A, device **100** in this embodiment is coupled between a source device **120** (such as a host computer) via a USB-C connection, and a sink device **122** (such as a display monitor and/or speakers) via any suitable interface connection (such as an HDMI port).

Device **100** as described herein is only an exemplary embodiment of the present invention, and in practice may be implemented in hardware only or a combination of both hardware and software. Device **100** is described herein for illustrative purposes with an exemplary set of modules and components performing various functionalities within device **100.** However, in practice, device **100** may have more or fewer components and modules than shown, may combine two or more of the components or modules, or may have a different configuration or arrangement of the components or modules. Device **100** may include any additional component enabling it to function such as a motherboard, data busses, power supply, a network interface card, etc. (not shown).

Device **100** may be a dongle, e.g., a small computer hardware item that connects directly at one end to a port on a computing device, such as a USB-C port of a source **120.** In the dongle configuration, device **100** may then connect at another end to the sink device **122** via a suitable connecting cable, such as an HDMI cable. In some cases, device **100** may be integrated into a USB-C interface medium, such as a USB-C cable, for example, device **100** may be integrated in to the cable or one of the end connectors. In other cases, device **100** may be realized as a standalone computer hardware item comprising one or more cases or units, which connects to source **120** via a USB-C cable and to sink device **122** via a suitable connecting cable, such as an HDMI cable. However, other suitable configurations of device **100** may be realized, as is known in the art.

In some embodiments, device **100** may receive power for its operation from the source device (e.g., a host computer), via the USB-C connection. In other cases, device **100** may be powered independently of the source device, e.g., using a standard wall outlet. In some embodiments, device **100** may be battery-powered by a rechargeable battery which may be recharged via the USB-C connection to the source device.

Device **100** provides a secure video/audio transmitter designed for high-security environments (e.g., government, military, or corporate settings) to prevent potential data exfiltration or attacks via infected sink devices, while still enabling essential video output and display configuration. Device **100** acts as an inline intermediary between a host computer (e.g., laptop or desktop with USB-C video output support) and a sink device (e.g., monitor with USB-C, HDMI, or DP input).

In some embodiments, device **100** may store in memory **104** software instructions or components configured to operate device **100.** The software instructions may be any executable code, e.g., a software application, a program, a process, task or script. In some embodiments, the software instructions may include an operating system, including various software components and/or drivers for controlling and managing general system tasks (e.g., memory management, storage device control, power management, etc.) and facilitating communication between various hardware and software components.

In the exemplary configuration described herein, device **100** includes a controller **102;** a memory **104,** which may comprise a read-only erasable and programable memory (EEPROM) unit; at least one USB Type-C interface **106;** a signal processor **108** which may be or may comprise a video converter (such as a DisplayPort-to-HDMI or similar converter); and at least one device interface, such as interface **112** connectable to sink device **122.**

Controller **102** serves as the central processing and coordination hub of device **100** and controls the operation of device **100.** Controller **102** is operationally connected to and acts as the primary interface between all hardware and software components of device **102,** including memory **104,** USB-C interface **106,** signal processor **108,** and sink interface **112.** Controller **102** may receive and process inputs from multiple sources, including USB-C **106** interface and sink interface **112.** Controller **102** manages the complete data flow throughout device **100** and acts as an internal switching module which routes and manages data flow between the other modules and components.

In some embodiments, controller **102** is connected to and receives at least one or more of the following channels of USB-C interface **106:**
- High-speed data channels transmitted over transmitter (TX) and receiver (RX) differential pairs, TX1/RX1 and/or TX2/RX2 lines, which form unidirectional, high-bandwidth channels used to transport video and audio signals.
- Data lines D+ and D- which carry differential signals for lower-speed USB 2.0 data, such as like keyboards and mouse.
- Configuration channels CC1/CC2, used to detect connection orientation in relation to the USB-C port, power delivery, and channel configuration.
- Sideband use channel that transmits the sideband use channel signals SBU1/SBU2, which enable multi-purpose alternate modes (alt-mod) supported by the USB-C protocol.

Memory **504** may comprise a read-only erasable and programable memory (EEPROM) unit.

USB-C interface **106** is connectable to a USB-C port of any suitable device, such as source device **120,** directly or via any suitable connecting means, such as a USB-C cable. In some embodiments, USB-C interface **106** includes a USB hub and/or controller which manages the operation of USB-C interfaces **106.**

In some embodiments, interface **112** may be a USB-C port, a DisplayPort interface, a Thunderbolt interface, an HDMI (High-Definition Multimedia interface) interface, or any other suitable or desirable video interface.

In some embodiments, device **100,** e.g., via controller **102,** is configured to perform the USB-C handshake process between source **120** and sink **122,** to facilitate one-way data transmission, including secure video streaming (e.g., using DisplayPort over USB-C Alt Mode) from source **120** to sink **122.** In some embodiments, device **100** is configured to only permit video and audio data transmission from source device **120** to video sink device **122** through device **100,** and to prevent any data originating from video display **122** to be transmitted back to source device **120** via device **100,** i.e., through interface **112** and USB-C interface **106.** Thus, device **100** is configured to block any reverse data flow back to source device **120,** to prevent potential security risks like data exfiltration. Device **100** thus acts as a man-in-the-middle which emulates all of the operational attributes of sink **122** (e.g., power requirements, display configuration and settings, etc.) to source **120** during the handshaking process and all protocol interactions.

In some embodiments, upon connection of device **100** to source **120** and sink **122,** controller **102** may perform an initial scan to identify the operational attributes of sink **122,** including power requirements and display settings. Controller **102** may cache these identified operational attributes of sink **122,** e.g., by storing this information on memory **104.** Controller **102** may then simulate the power consumption needs of sink **122** to source **120** via a suitable communication to source **120,** to ensure that source **120** provides power as if directly connected to sink **122.** Controller **102** may then emulate sink **122** to source **120** based on the identified operational attributes of sink **122,** to configured the data channels, including the main video channels and sideband use (SBU) pins. Controller **102** may then simulate to source **120** the EDID and related display configuration data of sink **122,** including supported resolutions and refresh rates, color depth capabilities, audio formats, and timing parameters. If additional USB data channels are needed (e.g., alongside video), controller **102** may further simulate those to source **120.** Once the handshaking process is completed, device **100** may carry unidirectional video/audio data from source **120** to intermediary device **100,** which forwards it to sink **122.** This process maintains compatibility with USB-C standards while enforcing security.

In some embodiments, device **100** is capable of detecting EDID settings of video sink device **122,** and for communicating the EDID settings to the source device **120.** For example, upon initial connection, device **100** may read the EDID data from video sink device **122,** e.g., via the relevant pins in interface **112.** In some embodiments, this process may be a one-time EDID capture process performed upon initial connection. In some embodiments, device **100** may include a physical user-operated button configured to initiate the one-time acquisition of the EDID.

In some embodiments, device **100** then parses and validates the EDID data, and stores it in memory **104.** Device **100** may then transmit the EDID data from memory **104** to source device **120.** In some embodiments, this allows source device **120** to configure the video output optimally without direct, ongoing access to the EDID channel of video sink device **122.**

In some embodiments, after the initial EDID capture, the relevant EDID connection pins in interface **112** may be disconnected, isolated or blocked, to prevent further reads or writes. For example, in some embodiments, controller **102** and/or interface **112** are configured to disconnect, block and/or disable any connection pins or lines which are configured to transmit data from sink device **122** to the source device **120.** For example, when interface **112** is an HDMI interface, interface **112** and/or controller **102** are configured to disconnect and/or disable one or more pins within the HDMI interface that are configured to transmit data from sink device **122** to the source device **120.** Such lines or pins may include the Display Data Channel (DDC) and/or the Consumer Electronics Control (CEC) channel. In other embodiments, interface **112** is configured to transmit such signals from video display **122** through interface **112** only to controller **102,** while ensuring that such signals are not transmitted back to source device **120** through USB-C interface **106.** In yet other cases, the connection between interface **112** and controller **102** may comprise a unidirectional component or circuit (e.g., a diode, or a fiber-optic connection) configured to enforce unidirectionality of data transmission only from controller **102** to interface **112,** but to disable data transmission in the reverse path.

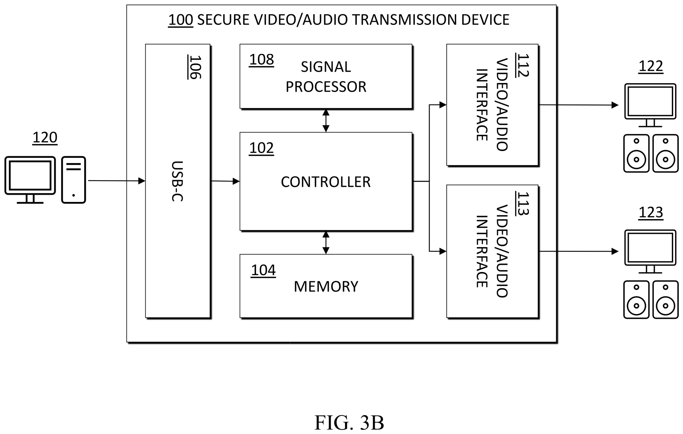

FIG. 3B is a block diagram of a variation of exemplary secure video/audio transmission device **100,** configured to provide secure high-speed video and audio data transmission and switching, between a source device **120** (such as a host computer) via a USB-C connection, and two or more video sink devices via interface connections **112, 113.** In the configuration shown in FIG. 3B, device **100** is configured to provide for secure high-speed video and audio data transfer and switching from a source (such as a host computer) via a USB-C connection, to two or more sink devices via interface connections.

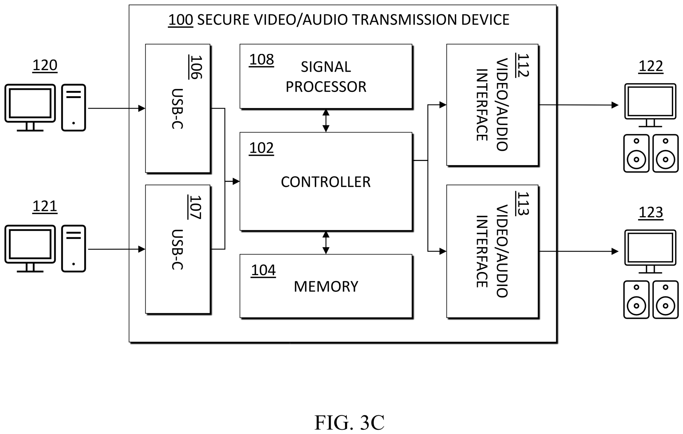

FIG. 3C is a block diagram of another variation of exemplary secure video/audio transmission device **100,** configured to provide secure high-speed video and audio data transmission and switching, between two or more source devices **120, 121** (such as two host computers) via respective USB-C connections, and two or more video sink devices via interface connections **112, 113.** In the configuration shown in FIG. 3C, device **100** is configured to provide for secure high-speed video and audio data transfer and switching from two or more sources (such as a host computers) via USB-C connections, to two or more sink devices via interface connections.

As shown in FIGS. 3B-3C, device **100** in this embodiment is coupled between one or more video source devices **120, 121** (such as a host computer) and two or more sink devices (such as a devices **122, 123).**

Device **100** in these embodiments may be a dongle, e.g., a small computer hardware item that connects directly at one end to a port on a computing device, such as a USB-C ports of a one or more sources **120, 121.** In the dongle configuration, device **100** may then connect at another end to the two or more sink devices **122, 123** via suitable connecting cables, such as HDMI cables. In some cases, device **100** may be integrated into a USB-C interface medium, such as a USB-C cable, for example, integrated in to the cable or one of the end connectors. In yet other cases, device **100** may be realized as a standalone computer hardware item comprising one or more cases or units, which connects to source devices **120, 121** via a USB-C cable and to two or more sink devices **122, 123** via suitable connecting cables, such as an HDMI cables. However, other suitable configurations of device 10 may be realized, as is known in the art.

In some embodiments, device **100** may receive power for its operation from the video sources (e.g., host computers), via respective USB-C connections. In other cases, device **100** may be powered independently of the source devices, e.g., using a standard wall outlet. In some embodiments, device **100** may be battery-powered by a rechargeable battery which may be recharged via the USB-C connection to the video source.

Device **100** in this example provides a secure video/audio transmitter designed for high-security environments (e.g., government, military, or corporate settings) to prevent potential data exfiltration or attacks via infected sink devices, while still enabling essential video output and display configuration. Device **100** acts as an inline intermediary between one or more host computers (e.g., laptop or desktop with USB-C video output support) and on or more sink devices (e.g., monitor with USB-C, HDMI, or DP input).

In some embodiments, device **100** may store in memory **104** software instructions or components configured to operate device **100.** The software instructions may be any executable code, e.g., a software application, a program, a process, task or script. In some embodiments, the software instructions may include an operating system, including various software components and/or drivers for controlling and managing general system tasks (e.g., memory management, storage device control, power management, etc.) and facilitating communication between various hardware and software components.

Device **100** in this configuration includes a controller **102;** a memory **104,** which may comprise a read-only erasable and programable memory (EEPROM) unit; at least one USB Type-C interface, such as interfaces **106, 107;** and a signal processor **108,** such as a DisplayPort-to-HDMI (or another interface) converter. Device **100** in these configurations comprises two or more device interfaces, such as interfaces **112, 113** connectable to sink devices **122, 123,** respectively.

USB-C interfaces **106, 107** are connectable to a USB-C port of any suitable device, such as source device **120,** directly or via any suitable connecting means, such as a USB-C cable. In some embodiments, USB-C interfaces **106, 107** include a USB hub and/or controller which manages the operation of USB-C interfaces **106, 107.**

Controller **102** serves as the central processing and coordination hub of device **100** and controls the operation of device **100.** Controller **102** is operationally connected to and acts as the primary interface between all hardware and software components of device **102,** including memory **104,** USB-C interfaces **106, 107,** signal processor **108,** and sink interfaces **112, 113.** Controller **102** may receive and process inputs from multiple sources, including USB-C **106** interface and sink interfaces **112, 113.** Controller **102** manages the complete data flow throughout device **100** and acts as an internal switching module which routes and manages data flow between the other modules and components.

In some embodiments, controller **102** is connected to and receives at least one or more of the following channels of USB-C interfaces **106, 107:**
- High-speed data channels transmitted over transmitter (TX) and receiver (RX) differential pairs, TX1/RX1 and/or TX2/RX2 lines, which form unidirectional, high-bandwidth channels used to transport video and audio signals.
- Data lines D+ and D- which carry differential signals for lower-speed USB 2.0 data, such as like keyboards and mouse.
- Configuration channels CC1/CC2, used to detect connection orientation in relation to the USB-C port, power delivery, and channel configuration.
- Sideband use channel that transmits the sideband use channel signals SBU1/SBU2, which enable multi-purpose alternate modes (alt-mod) supported by the USB-C protocol.

In some embodiments, interfaces **112, 113** may be USB-C ports, DisplayPort interfaces, Thunderbolt interfaces, HDMI (High-Definition Multimedia interface) interfaces, or any other suitable or desirable video interface.

In some embodiments, device **100,** e.g., via controller **102,** is configured to perform the USB-C handshake process between sources **120, 121** and sinks **122, 123,** to facilitate one-way data transmission, including secure video streaming (e.g., using DisplayPort over USB-C Alt Mode) from sources **120, 121** to sinks **122, 123.** In some embodiments, device **100** is configured to only permit video and audio data transmission from source device **120** to video sink device **122** through device **100,** and to prevent any data originating from video display **122** to be transmitted back to source device **120** via device **100,** i.e., through interfaces **112, 113** and USB-C interfaces **106, 107.** Thus, device **100** is configured to block any reverse data flow back to source device **120,** to prevent potential security risks like data exfiltration. Device **100** thus acts as a man-in-the-middle which emulates all of the operational attributes of sinks **122, 123** (e.g., power requirements, display configuration and settings, etc.) to sources **120, 121** during the handshaking process and all protocol interactions.

In some embodiments, upon connection of device **100** to sources **120, 121** and sinks **122, 123,** controller **102** may perform an initial scan to identify the operational attributes of sinks **122, 123,** including power requirements and display settings. Controller **102** may cache these identified operational attributes of sinks **122, 123,** e.g., by storing this information on memory **104.** Controller **102** may then simulate the power consumption needs of sinks **122, 123** to sources **120, 121** via a suitable communication to sources **120, 121,** to ensure that sources **120, 121** provide power as if directly connected to sinks **122, 123.** Controller **102** may then emulate sinks **122, 123** to sources **120, 121** based on the identified operational attributes of sinks **122, 123,** to configured the data channels, including the main video channels and sideband use (SBU) pins. Controller **102** may then simulate to sources **120, 121** the EDID and related display configuration data of sinks **122, 123,** including supported resolutions and refresh rates, color depth capabilities, audio formats, and timing parameters. If additional USB data channels are needed (e.g., alongside video), controller **102** may further simulate those to sources **120, 121.** Once the handshaking process is completed, device **100** may carry unidirectional video/audio data from sources **120, 121** to intermediary device **100,** which forwards it to sinks **122, 123.** This process maintains compatibility with USB-C standards while enforcing security.

In some embodiments, device **100** is capable of detecting EDID settings of video sink devices **122, 123** and for communicating the EDID settings to source devices **120, 121.** For example, upon initial connection, controller **102** may read the EDID data from video sink devices **122, 123,** e.g., via the relevant pins in interfaces **112, 113.** In some embodiments, this process may be a one-time EDID capture process performed upon initial connection. In some embodiments, device **100** may include a physical user-operated button configured to initiate the one-time acquisition of the EDID.

In some embodiments, controller **102** then parses and validates the EDID data, and stores it in memory **104.** Controller **102** may then transmit the EDID data from memory 104 to source devices **120, 121.** In some embodiments, this allows source devices **120, 121** to configure the video output optimally without direct, ongoing access to the EDID channel of video sink devices **122, 123.**

In some embodiments, after the initial EDID capture, the relevant EDID connection pins in interfaces **112, 113** may be disconnected, isolated or blocked, to prevent further reads or writes. For example, in some embodiments, controller **102** and/or interfaces **112, 113** are configured to disconnect, block and/or disable any connection pins or lines which are configured to transmit data from sink devices **122, 123** to the source devices **120, 121.** For example, when interfaces **112, 113** are an HDMI interface, interfaces **112, 113** and/or controller **102** are configured to disconnect and/or disable one or more pins within the HDMI interface that are configured to transmit data from sink devices **122, 123** to the source devices **120, 121.** Such lines or pins may include the Display Data Channel (DDC) and/or the Consumer Electronics Control (CEC) channel. In other embodiments, interfaces **112, 113** are configured to transmit such signals from video display **122** through interfaces **112, 113** only to controller **102,** while ensuring that such signals are not transmitted back to source devices **120, 121** through USB-C interfaces **106, 107.** In yet other cases, the connection between interfaces **112, 113** and controller **102** may comprise a unidirectional component or circuit (e.g., a diode, or a fiber-optic connection) configured to enforce unidirectionality of data transmission only from controller **102** to interfaces **112, 113** to, but to disable data transmission in the reverse path.

As noted above, USB-C protocol supports alternate modes (alt-modes) for high-speed data transfer over a USB-C connection, which enables interoperability across multiple types of devices. A USB-C connection is established by connecting two devices via a USB Type-C cable. Because either one of the devices could potentially be a power supplier (source) or a power consumer (sink), the USB-C protocol provides for a configuration process over the configuration channels CC1/CC2, to determine the power and data parameters of the connection between the source device and the sink. The power delivery parameters are determined over the active configuration channel CC1/CC2, using the power delivery protocol (USB-PD), to set up the ongoing power sourcing and battery charging as applicable. Then, alt-mode can be initiated over the configuration channel CC1/CC2 lines, as defined by the USB-PD specification. Once alt-mode is initiated, the DisplayPort link negotiation begins over the sideband use channel SBU1/SBU2 lines, to set the parameters for the main link transmissions of DisplayPort data over the over TX1/RX1 and/or TX2/RX2 lines.

However, as noted above, data transmission between a source and a display over USB-C protocol is not secure, and thus presents a security risk. For example, a malicious code planted in the display can be transmitted back to the video source and infect it and potentially other devices in a network to which it may be connected.

In some embodiments, device **100** is configured to provide further security measures to protect the transmission of data between source devices **120, 121** and sink devices **122, 123.** In some embodiments, controller **102** comprises one or more dedicated circuits and/or software agents configured to monitor data communication through device **100.** Upon the occurrence of one or more conditions, controller **102** may be configured to disconnect and/or disable all data communication passing through device **100.** In some embodiments, controller 102 may be further configured to shut down the USB-C connections to source devices **120, 121,** by disabling power delivery channels, data channels, control channels, auxiliary channels, alt-mode protocols, and any combination thereof.

In some embodiments, controller **102** may be configured to continuously monitor the power delivery channels, data channels, control channels, auxiliary channels, alt-mode protocols of the USB-C connections between device **100** and source devices **120, 121.** In some embodiments, upon detecting of suspicious malicious activity over the power delivery channels, data channels, control channels, auxiliary channels, alt-mode protocols of the USB-C connection, controller **102** may be configured to completely disable and/or disconnect any one or more of the USB-C interfaces **106, 107** and/or power delivery channels, data channels, control channels, auxiliary channels, alt-mode protocols, and any combination thereof with respect to the USB-C connection between device **100** and source devices **120, 121.**

Accordingly, in some embodiments, device **100** of the present disclosure (in all variations and configurations) provides for secure transmission of video between a source and one or more sink devices over USB-C protocol.

In some embodiments, device **100** of the present disclosure (in all variations and configurations) provides for secure transmission of video (and embedded audio) between one or more sources and one or more sink devices, over USB-C protocol. In some embodiments, device **100** provides for one or more switching and selection mechanisms to allow users to select and switch between the various sources and the various sinks devices. In some embodiments, such switching and selection mechanisms may include on-screen display (OSD), i.e., a menu overlay on the monitor where users can use hotkeys or a mouse to browse and select available sources; physical buttons or a remote controls; a software or web interface using a mobile application or a browser-based dashboard; and the like.

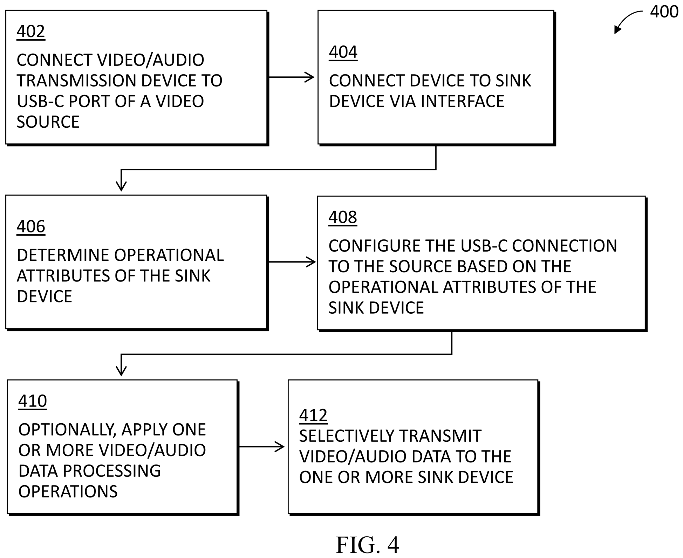

FIG. 4 illustrates the functional steps in a method **400** for secure transmission of video and/or audio data between one or more sources and one or more sink devices over USB-C protocol, using exemplary devices **100** (in all of its variations and configurations) as described with reference to FIGS. 3A-3C, according to some embodiments of the present disclosure.

The various steps of method **400** may either be performed in the order they are presented or in a different order (or even in parallel), as long as the order allows for a necessary input to a certain step to be obtained from an output of an earlier step. In addition, the steps of method **400** may be performed automatically (e.g., by a software agent running on device **100),** unless specifically stated otherwise.

In step **402,** device **100** is connected to a source device **120,** such as a host computer. Where device **100** is realized as a dongle, device **100** may be connected directly at one end to a USB-C port of source device **120.** In other cases, where device **100** is realized as a standalone computer hardware item comprising one or more cases or units, device **100** may be connected to a USB-C port of source device **120** via USB-C cables. In some embodiments, device **100** may be connected to the USB-C ports of source device **120** in either direction, i.e., the user can plug the connector into a receiving slot in either the 'up' or 'down' orientation in relation to the USB-C port.

In the case of the variation of device **100** shown in FIGS. 3B-3C, configured to support two or source devices, device **100** may be connected to two or more source devices **120, 121** via USB-C interfaces **106, 107,** and the various steps of method **400** are performed with respect to both of source devices **120, 121,** respectively.

Upon physical connection of device **100** to source **120,** initial detection is performed via the configuration channels of USB-C interface **106,** to indicate to source **120** that a USB-C device is attached. The initial detection process includes determining the respective roles of source **120** and device **100,** as well as USB-C connector orientation (i.e., flip detection).

In step **404,** device **100** may be connected to a sink device, such as display monitor **122,** via a suitable connecting cable, such as an HDMI cable.

In the case of the variation of device **100** shown in FIGS. 3B-3C, configured to support two or more sink devices, device **100** may be connected to two or more sink devices **122, 123** via suitable connecting cables, such as HDMI cables, and the various steps of method **400** are performed with respect to both of sink devices **122, 123,** respectively.

Upon physical connection of device **100** to sink **122,** initial detection is performed to indicate to device **100** that sink **122** is attached. The initial detection process includes determining the respective roles of device **100** and sink **122.**

In step **406,** controller **102** performs an initial scan of sink **122** to identify the operational attributes of sink **122,** including power requirements and display settings, including supported resolutions and refresh rates, color depth capabilities, audio formats, and timing parameters. Controller **102** may cache these identified operational attributes of sink **122,** e.g., by storing this information on memory **104.**

In step **408,** controller **102** may initiate a configuration process (handshaking) of the USB-C connections to source device **120** over the configuration channels (CC1 and CC2), to determine functional parameters of the connection to permit transmission of video and audio signals via device **100** to sink device **122.**

In some embodiments, controller **102** may be configured to simulate sink device **122** in order to configure the USB-C connection to source device **120,** based, at least in part, on predetermined parameters that are hard-coded and stored within device **100,** e.g., on memory **104.** In some embodiments, the hard-coded parameters stored by device **100** may be protected from access and/or modification by users or any malicious attack.

In some embodiments, controller **102** may be configured to simulate sink device **122** in order to configure the USB-C connection to source device **120,** based, at least in part, on the operational and/or functional requirements and operational attributes of sink device **122,** as determined by controller **102** in step **406.**

In some embodiments, controller **102** may be configured to simulate sink device **122** in order to configure the USB-C connection to source device **120,** based, at least in part, on both predetermined parameters that are hard-coded and stored within device **100,** e.g., on memory **104,** and the operational and/or functional requirements and operational attributes of sink device **122,** as determined by controller **102** in step **406.**

In some embodiments, the handshaking process includes at least the following:
- Connection detection and USB-C connector orientation.
- USB power delivery (USB-PD) protocol negotiation with respect to power requirements.
- DisplayPort Alternate Mode negotiation, including DisplayPort settings and data lanes configuration.

In some embodiments, the configuration of the USB-C connection to source device **120** may include determining power parameters for powering device **100** via the USB-C connection and/or for charging a rechargeable battery of device **100.** The parameters for powering device **100** may include, but are not limited to, voltage, maximum current consumption, and the identities of the power source and the power sink.

In some embodiments, controller **102** configures the USB-C connection to source device **120** so as to enter a desired alt-mode communication standard of the USB-C protocol, such as DisplayPort. First, controller **102** may initiate the alt-mode of the USB-C connection is initiated through USB-PD over the configuration channel CC1/CC2CC lines. Once alt-mode is initiated, controller **102** may initiate the DisplayPort link negotiation process begins over the sideband use channel signals SBU1/SBU2 using DP-AUX protocol, as defined by the VESA DisplayPort over USB Type-C specification. In some embodiments, the negotiation process includes data transmission configuration (e.g., transmission speed and quality), display device requirements (EDID), and the like, as defined by the VESA DisplayPort main specification.

In step **410,** controller **102** may optionally determine one or more processing operations to be applied to the video or audio data transmitted from source device **120** over the initiated alt-mode protocol. For example, controller **102** may operate signal processor **108** to process the video data transmission in any desired or suitable manner, such as by converting the DisplayPort protocol data to HDMI protocol data, or to any other suitable video protocol.

In step **412,** controller **102** initiates secure video (which may include embedded audio) data transmission from source device **120** via USB-C interface **106** to sink device **122, 123.**

In the case of the variations of device **100** shown in FIGS. 3AB-3C, configured to support two or more sink devices **122, 123,** device **100** may be operated to selectively transmit the video data transmission signal to a selected one of interfaces **112, 113** connected to sink devices **122, 123,** respectively, e.g., based on user selection, as described above.

In a second aspect of the present invention, a secure keyboard, video and mouse (KVM) switch is disclosed. In some embodiments, the secure KVM of the present disclosure provides for selectively controlling two or more host computers from a single user console comprising a display device (e.g., a display monitor) and control peripherals, such as a keyboard and/or pointing device (e.g., a mouse).

As noted above, controlling multiple host computers from a single central user console can raise security challenges, because shared displays and control peripherals may be targets for malicious attacks which attempt to cause data leakage between the separate host computers. One possible solution is to enforce unidirectionality of data transmission between the host computers and each of the user control and display peripherals (e.g., unidirectional video streaming from host to display, and unidirectional data from keyboard and mouse to the host computer), thus minimizing the risk of data leakage between host computers.

However, one of the challenges is the fact that different display monitors may require different video transmission settings to enable optimal operation of the display. Thus, connecting a display to a host computer typically requires transmitting EDID settings data from the display to the computer, to enable the host computer to adjust its video stream output to the monitor's settings. The transmission of EDID settings tables from the display monitor to the host computer thus requires at least some bi-directional data transmission between the user control and display peripherals and the multiple host computers.

This reality presents a risk is that a connected host computer may be hacked and used to transmit malicious code through the bi-directional EDID data line back to the shared display. Then, when the display is switched to another host computer, the data that was maliciously stored on the display may be transferred to a another host computer.

Accordingly, the present disclosure provides for a secure KVM device coupled between one or more host computers and a single user console comprising a display and control peripherals, such as keyboard and/or mouse, for selectively controlling a selected one of the host computers. In some embodiments, the present device provides for secure unidirectional transmission of control inputs only from the keyboard and mouse to the selected host computer, and for secure unidirectional transmission of video data only from the selected host computer to the display.

In some embodiments, the present disclosure provides for a secure KVM device coupled between one or more host computers and a single user console comprising a display and control peripherals, such as keyboard and/or mouse, for selectively controlling a selected one of the host computers. In some embodiments, the present device provides for emulating control inputs from the keyboard and mouse to the selected host computer, while blocking any direct or pass-through data communication, and for secure unidirectional transmission of video data only from the selected host computer to the display.

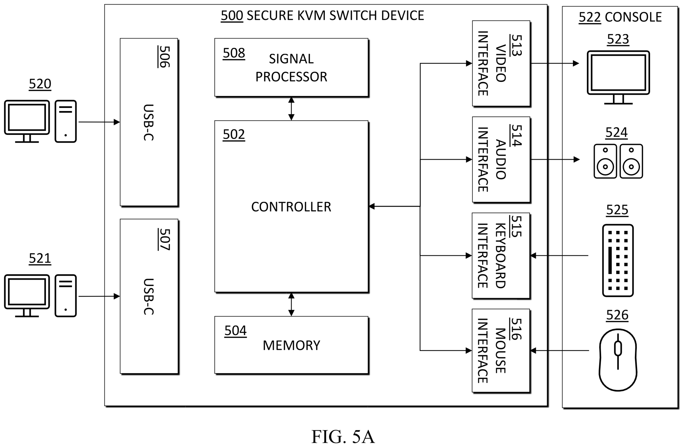

FIG. 5A shows secure KVM switch device **500** of the present disclosure. In some embodiments, device **500** is coupled between two or more host computers **520, 521** and one or more user consoles **522.** Each user console **522** comprises typically one or more display monitors **523,** and peripheral devices such as an audio device (e.g., speakers, headphones, etc.) **524,** and control devices, such as a keyboard **25,** and/or a pointing device (mouse) **526.** In some embodiments, console **522** may comprise additional or different peripherals, such as a webcam (not shown). In some embodiments, pointing device **526** can be any device such as a mouse, graphics tablet, stylus, pointing-stick, touch-pad, trackball, and the like, used to control the movements of a cursor on a computer screen.

The embodiment of device **500** shown in FIG. 5A is configured for switching a user console **522** comprising, e.g., a display **523,** audio device **524,** and peripheral controls **525, 526,** between two host computers **520, 521.** However, the components and principles of operation as shall be described hereinbelow likewise apply to any one-to-many or many-to-many potential embodiments of device **500,** comprising one or more user consoles **522** which may be switched among two or more host computers.

Device **500** as described herein is only an exemplary embodiment of the present invention, and in practice may be implemented in hardware only or a combination of both hardware and software. Device **500** is described herein for illustrative purposes with an exemplary set of modules and components performing various functionalities within device **500.** However, in practice, device **500** may have more or fewer components and modules than shown, may combine two or more of the components or modules, or may have a different configuration or arrangement of the components or modules. Device **500** may include any additional component enabling it to function such as a motherboard, data busses, power supply, a network interface card, etc. (not shown).

In some embodiments, device **500** may store in memory **504** software instructions or components configured to operate device **500.** The software instructions may be any executable code, e.g., a software application, a program, a process, task or script. In some embodiments, the software instructions may include an operating system, including various software components and/or drivers for controlling and managing general system tasks (e.g., memory management, storage device control, power management, etc.) and facilitating communication between various hardware and software components.

Device **500** in this embodiment may be realized as a standalone computer hardware item comprising one or more cases or units, which connects to host computers **520, 521** via respective USB-C cables. However, other suitable configurations of device **500** may be realized, as is known in the art.

In some embodiments, device **500** may receive power for its operation from one or more of host computers **520, 521,** via the USB-C connection. In other cases, device **500** may be powered independently of the host computers, e.g., using a standard wall outlet. In some embodiments, device **500** may be battery-powered by a rechargeable battery which may be recharged via the USB-C connection to the host computers.

Device **500** in this configuration comprises at least the following components, modules and/or functionalities:
- Controller **502.**
- Memory **504.**
- USB-C interfaces **506, 507.**
- Signal processor **508.**
- Video interface **513.**
- Peripheral interfaces:
   ∘ Audio interface **514.**
   ∘ Keyboard interface **515.**
   ∘ Mouse interface **516.**

In some embodiments, the peripheral interfaces, e.g., audio interface **514,** keyboard interface **515,** and mouse interface **516,** may comprise any suitable port, such as USB-A ports, for connecting physical peripherals (keyboard, mouse, headset, etc.).

The enumerated peripheral interfaces are shown for exemplary purposes only, and in practice may include more or different peripheral ports, such as a webcam connection. However, the principles of operation of device **500** as described herein are equally applicable to any number and/or different types of peripheral devices.

In some embodiments, device **500** further includes user-operable switching and selection mechanisms, to allow users to select and switch between host computers **520, 521.** In some embodiments, such switching and selection mechanisms may include physical buttons or a remote control; on-screen display (OSD), i.e., a menu overlay on the monitor where users can use hotkeys or a mouse to browse and select available sources; a software or web interface using a mobile application or a browser-based dashboard; and the like.

Controller **502** serves as the central processing and coordination hub of device **500** and controls the operation of device **500.** Controller **502** is operationally connected to and acts as the primary interface between all hardware and software components of device **502,** including memory **504;** USB-C interfaces **506, 507;** signal processor **508;** and interfaces **513, 514, 515, 516.**

Controller **502** manages the complete data flow throughout device **500** and acts as an internal switching module which routes and manages data flow between the other modules and components. In some embodiments, controller **502** is connected to and receives at least one or more of the following channels of USB-C interface **506, 507:**
- High-speed data channels transmitted over transmitter (TX) and receiver (RX) differential pairs, TX1/RX1 and/or TX2/RX2 lines, which form unidirectional, high-bandwidth channels used to transport video and audio signals.
- Data lines D+ and D- which carry differential signals for lower-speed USB 2.0 data, such as like keyboards and mouse.
- Configuration channels CC1/CC2, used to detect connection orientation in relation to the USB-C port, power delivery, and channel configuration.
- Sideband use channel that transmits the sideband use channel signals SBU1/SBU2, which enable multi-purpose alternate modes (alt-mod) supported by the USB-C protocol.

Memory **504** may comprise a read-only erasable and programable memory (EEPROM) unit.

One or more USB Type-C interfaces (e.g., interfaces **506, 507),** are each connectable to a USB-C port of any suitable device, such as host computers **520, 521,** directly or via any suitable connecting means, such as a USB-C cable. In some embodiments, USB-C interfaces **506, 507** include a USB hub and/or controller which manages the operation of USB-C interfaces **506, 507**

Signal processor 508 may be configured to process video and/or audio data transmission using any desired or suitable processing method or algorithm, such as by converting DisplayPort protocol data to HDMI protocol data, or to any other suitable video protocol.

Keyboard interface **515** and/or mouse interface **516** are configured to receive standard bidirectional peripheral control commands from keyboard **525** and/or mouse **526.**

In one embodiment, keyboard interface **515** and/or mouse interface **516** are then configured to transmit these commands to controller **502,** for communicating these control commands to host computers **520, 521.** In some embodiments, keyboard interface **515** and/or mouse interface **516** are configured to receive standard bidirectional peripheral control commands from keyboard **525** and/or mouse **526,** and to transmit these commands using a unidirectional transmission protocol and/or connection. For example, the connection between keyboard interface **515** and/or mouse interface **516** and controller **502** may comprise a unidirectional component or circuit (e.g., a diode, or a fiber-optic connection) configured to enforce unidirectionality of data transmission only from keyboard **525** and/or mouse **526** to controller **502,** but to prevent any data transmission in the reverse path, back to keyboard **525** and/or mouse **526.**

Controller **502** may be configured to receive the standard bidirectional peripheral control commands from keyboard interface **515** and/or mouse interface **516,** and to apply further processing in any suitable manner, such as by applying any proprietary or industry-standard protocol, e.g., UART (Universal Asynchronous Receiver/Transmitter) communication protocol.

In another embodiments, keyboard interface **515** and/or mouse interface **516** are then configured to transmit these commands to controller **502.** Controller **502** may be configured to simulate to host computers **520, 521** the peripheral controls (keyboard **525** and/or mouse **526),** i.e., cause device 500 to present itself to the host computers as a composite USB device that mimics the identified peripherals keyboard **525** and/or mouse **526,** while preventing direct or pass-through data transmission from the keyboard **525** and/or mouse **526** to the host computers, as well as preventing any data transmission from the host computers to keyboard **525** and/or mouse **526.**

In some embodiments, video interface **513** is connectable to display device **523.Video** interface **513** may be a DisplayPort interface, a Thunderbolt3 interface, an HDMI (High-Definition Multimedia interface) interface, or any other suitable or desirable video connection, without limitation.

In some embodiments, video interface **513** is configured to only permit video and audio data transmission from host computers **520, 521** to video display device **523** through device **500,** and to prevent any data originating from video display **523** to be transmitted back to host computers **520, 521** via device **500.**

In some embodiments, device **500,** e.g., via controller **502,** is configured to perform the USB-C handshake process with host computers **520, 521,** to facilitate control of host computers **520, 521** via console **522.** In some embodiments, device **500** is configured to only permit video and audio data transmission from a selected one of host computers **520, 521** to console **522,** and to prevent any data originating from console **522** to be transmitted back to host computers **520, 521.** Thus, device **500** is configured to block any reverse data flow back to host computers **520, 521,** to prevent potential security risks like data exfiltration. Device **500** thus acts as a man-in-the-middle which emulates all of the operational attributes of the various components of console **522** to host computers **520, 521** during the handshaking process and all protocol interactions.

In some embodiments, upon connection of device **500** to host computers **520, 521** and the components of console **522** (i.e., display monitor **523,** audio device **524,** keyboard **525,** and/or mouse **526),** controller **502** may perform an initial scan to identify any relevant operational attributes of the components of console **522,** including power requirements and display **523** settings.

For example, display operational attributes may include the EDID information of the actual display, including supported resolutions, refresh rates, color depths, and timing parameters.

For example, keyboard operational attributes may include USB descriptor information (vendor ID, product ID, capabilities), polling rate (typically 125Hz to 1000Hz for gaming keyboards), key rollover capability (6KRG, NKRO), scan code timing and bounce characteristics, special function keys and media controls, and/or backlight control protocols if applicable.

For pointing devices (e.g., a mouse), operational attributes may include polling rate (125Hz to 8000Hz for high-end gaming mice), DPI settings and switching behavior, number of buttons and their mappings, acceleration curves and sensor characteristics, and/or scroll wheel resolution and behavior.

Controller **502** may cache these identified operational attributes, e.g., by storing this information on memory **504.**

Controller **502** may then simulate these operational attributes to host computers **520, 521,** to configure the power delivery, data channels, and display settings (EDID) of the USB-C connections to host computers **520, 521.**

Controller **502** may further simulate to host computers **520, 521** the EDID and related display configuration data of display **523,** including supported resolutions and refresh rates, color depth capabilities, audio formats, and timing parameters.

Controller **502** may further simulate to host computers **520, 521** additional USB data channels that are needed for audio device **524,** keyboard **525,** and/or mouse **526.** Controller **502** may further simulate to host computers **520, 521** the peripheral controls (audio device **524,** keyboard **525** and/or mouse **526),** i.e., cause device **500** to present itself to the host computers as a composite USB device that mimics the identified peripherals audio device **524,** keyboard **525** and/or mouse **526,** while preventing direct or pass-through data transmission from the audio device **524,** keyboard **525** and/or mouse **526** to the host computers, as well as preventing any data transmission from the host computers to keyboard **525** and/or mouse **526.**

In some embodiments, interface **513** is configured to receive data from display device **523** that is designed to be transmitted from display device **523** to the host computers **520, 521,** because it may be required or necessary for the optimal operation of display device **523.** Such data lines or pins may include the Display Data Channel (DDC) and/or the Consumer Electronics Control (CEC) channel. In such cases, controller **502** may be configured to receive and store such data, e.g., in memory **504,** and to prevent any such data originating from video display **523** to be transmitted back to host computers **520, 521.** Thus, for example, controller **502** may be configured to receive and store DDC settings received from display device **523** in memory **504.** Controller **502,** for example, may then use such data to determine the required video settings for display device **523,** and to transmit appropriate instructions (which may be stored in a separate predetermined settings table on memory **504)** to host computers **520, 521,** so also to enable host computers **520, 521** to adjust a video output in accordance with the technical specifications of display device **523.**

For example, in some embodiments, device **500** is capable of detecting EDID settings of display **523.** For example, upon initial connection, device **500** may read the EDID data from display **523,** e.g., via the relevant pins in the video interface **513.** In some embodiments, this process may be a one-time EDID capture process performed upon initial connection. In some embodiments, device **500** may include a physical user-operated button configured to initiate the one-time acquisition of the EDID.

In some embodiments, device **500** then parses and validates the EDID data, and stores in memory **504.** Device **500** may then transmits the EDID data from memory **504** to host computers **520, 521.** In some embodiments, this allows host computers **520, 521** to configure the video output optimally without direct, ongoing access to the EDID channel of display **523.**

In some embodiments, after the one-time EDID capture process and during normal operation thereafter, interface **513** is configured to disconnect, block and/or disable one or more pins within interface **513** that are configured to transmit data from display **523** to the host computers **520, 521.** For example, such lines or pins may include the Display Data Channel (DDC) and/or the Consumer Electronics Control (CEC) channel in HDMI interfaces. In other embodiments, interface **513** is configured to allow transmission of these signals from display **523** through interface **513** only to controller **502,** while ensuring that such signals are not transmitted back to host computers **520, 521.** In yet other cases, the connection between interface **513** and controller **502** may comprise a unidirectional component or circuit (e.g., a diode, or a fiber-optic connection) configured to enforce unidirectionality of data transmission only from controller **502** to interface **513,** but to disable data transmission in the reverse path.

In some embodiments, audio interface **514** is connectable to audio device **524.** Audio interface **514** may comprise any audio output port or connector used for connecting audio devices such as headphones, speakers, amplifiers, DACs, or sound systems. Audio interface **514** may also comprise circuitry configured for handling analog-to-digital (ADC) and/or digital-to-analog (DAC) conversion.

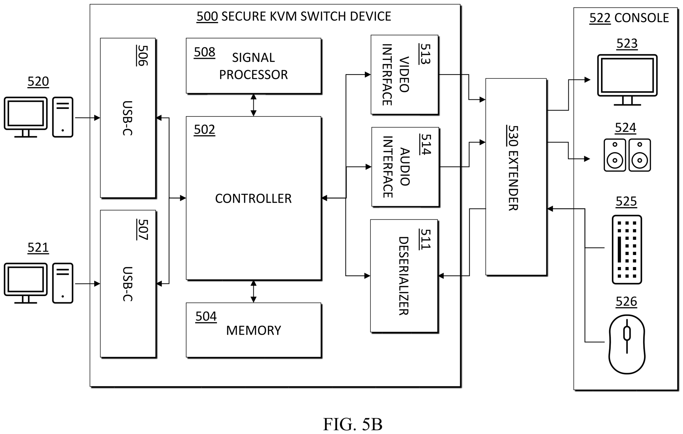

In a variation of device **500** shown in FIG. 5B, user console **522,** comprising display **523,** audio device **524,** keyboard **525** and/or mouse **526** may be located remotely, to allow a user to control one or more host computers **520, 521** from a distant location, such as another room, building, etc. In these configurations, Device **500** may be placed near host computers **520, 521,** and interface directly with host computers **520, 521** via USB-C connections. At the same time, display **523,** audio device **524,** keyboard **525** and/or mouse **526** may be located remotely and connect to device **500** via a remote extender **530,** which handles the communications between console **522** and device **500.** However, in some cases, an extender **530** may be used to handle the communications between console **522** and device **500** even if device **500** and console **522** are located in close proximity or in the same room, where direct connection may also be possible.

Extender **530** typically employs high-speed data transmission links, such as fiber optic cables, with separate channels for different data directions: 'downstream' video transmission from device **500** to display **523** and/or audio device **524,** and 'upstream' from keyboard **525** and/or mouse **526** to device **500.** The downstream data path is typically a high-bandwidth video (which may include embedded audio) as well as audio channels, which uses a unidirectional fiber optic.

The upstream data path (from keyboard **525** and/or mouse **526** to device **500)** is typically a low-bandwidth channel for control signals from keyboard and/or mouse that are captured at the remote console **522,** serialized, and sent back to the device **500** for transmission into the device **500.** To enable long-distance transmission without signal degradation, a unidirectional fiber optic setup with SERDES (Serializer/Deserializer) may be employed. This configuration uses a single fiber strand dedicated to one-way traffic (keyboard **525** and/or mouse **526** to device **500).** The input data is captured at console **522** from keyboard **525** and/or mouse **526,** packetized, and converted into a serial bitstream for remote transmission. Once received at device **500,** the data is converted back to parallel data by deserializer **511,** and is transmitted to controller **502,** which uses it to emulate the inputs of keyboard **525** and/or mouse **526** for transmission to host computers **520, 521** via USB-C interfaces **506, 507.**

In some embodiments, device **500** is configured to provide further security measures to protect the transmission of data between host computers **520, 521** and console **522.** In some embodiments, controller **502** comprises one or more dedicated circuits and/or software agents configured to monitor that data communication through device **500** and upon the occurrence of one or more conditions, controller **502** may be configured to disconnect and/or disable all data communication passing through device **500.** In some embodiments, controller **502** may be further configured to shut down the USB-C connection to host computers **520, 521,** by disabling power delivery channels, data channels, control channels, auxiliary channels, alt-mode protocols, and any combination thereof.

In some embodiments, controller **502** may be configured to continuously monitor the power delivery channels, data channels, control channels, auxiliary channels, alt-mode protocols of the USB-C connection between device **500** and host computers **520, 521.** In some embodiments, upon detecting of suspicious malicious activity over the power delivery channels, data channels, control channels, auxiliary channels, alt-mode protocols of the USB-C connection, controller **502** may be configured to completely disable and/or disconnect any one or more of the USB-C interfaces **506, 507** and/or power delivery channels, data channels, control channels, auxiliary channels, alt-mode protocols, and any combination thereof with respect to the USB-C connection between device **500** and host computers **520, 521.**

Accordingly, in some embodiments, device **500** of the present disclosure (in all variations and configurations) provides a secure KVM for selectively controlling two or more host computers **520, 521** from a single user console comprising a display device **523,** audio device **524,** a keyboard **525,** and/or a pointing device **526** (e.g., a mouse).

In some embodiments, device **500** is configured to receive from keyboard **525** and pointing device **526** control commands and selectively and unidirectionally transmit the control commands to a selected host computer of host computers **520, 521,** while ensuring that data is not transmitted in the opposite direction, from the selected host computer to keyboard **525** and pointing device **526;** and to receive video and/or audio data from the selected host computer of host computers **520, 521** and to transmit the video data to display device **523** and/or audio device **524,** while ensuring that data is not transmitted in the opposite direction, from display device **523** and/or audio device **524** to the selected host computer.

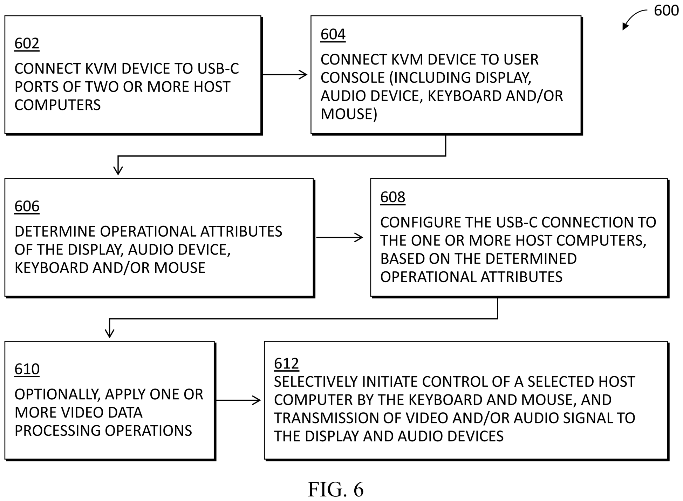

FIG. 6 illustrates the functional steps in a method **600** for securely selectively controlling two or more host computers from a single user console comprising a keyboard, a pointing device (e.g., a mouse), and a display device (e.g., a display monitor). The steps of method **600** will be described with continuous reference to device **500** shown in FIGS. 5A-5B.

The various steps of method **600** may either be performed in the order they are presented or in a different order (or even in parallel), as long as the order allows for a necessary input to a certain step to be obtained from an output of an earlier step. In addition, the steps of method **600** may be performed automatically (e.g., by a software agent running on device **500),** unless specifically stated otherwise.

In step **602,** device **500** is connected to two or more host computers **520, 521.** For example, device **500** may be connected to respective USB-C ports of host computers **520, 521** via suitable USB-C cables. In some embodiments, device **500** may be connected to the respective USB-C ports of host computers **520, 521** in either direction, i.e., the user can plug the connector into a receiving slot in either the 'up' or 'down' orientation in relation to the USB-C port.

Upon physical connection of device **500** to host computers **520, 521,** initial detection is performed via the configuration channels of USB-C interface **506, 507,** to indicate to host computers **520, 521** that a USB-C device is attached. The initial detection process includes determining the respective roles of host computers **520, 521** and device **500,** as well as USB-C connector orientation (i.e., flip detection).

In some embodiments, controller **502** detects a specific signal from the one or more host computers **520, 521** indicating that one or more host computers **520, 521** are connected to device **500** via USB-C interfaces **506, 507.** Controller **502** detects a specific signal from the host computers **520, 521** indicating that one or more host computers **520, 521** are connected to device **500** via USB-C interfaces **506, 507,** wherein the signal may be transmitted from host computers **520, 521** via USB-C interfaces **506, 507** to controller **502.** In some embodiments, based on the detected signal, controller **502** deems one or more host computers **520, 521** to be connected to device **500.**

In step **604,** device **500** may be connected to user console **522** by:
- Connecting display monitor **523** to video interface **513** via a suitable video connecting cable, such as an HDMI cable.
- Connecting audio device **524** to audio interface **514** via a suitable connecting cable.
- Connecting keyboard **525** to keyboard interface **515** via a suitable connecting cable, e.g., a USB connecting cable.
- Connecting pointing device (mouse) **526** to mouse interface **516** via a suitable connecting cable, e.g., a USB connecting cable.

In a variation with reference to FIG. 5B, device **500** may be connected to user console **522** which is located remotely, via an extender **530,** which handles the communications between console **522** and device **500.**

Upon physical connection of device **500** to the various components of console **522,** initial detection is performed to indicate to device **500** that the various components of console **522** are attached. The initial detection process includes determining the respective roles of device **500** and each of the various components of console **522.**

In some embodiments, controller **502** detects one or more specific signals originating from display device **523,** audio device **524,** keyboard **525,** and/or mouse **526,** as the case may be, such as hot plug detect signal (HPD), auxiliary channel signals AUX+/-, DDC channel signals, and/or any other signal which may be transmitted from a display and control peripherals to host computers to enable a functional connection between the host computers and the display and control peripherals. In some embodiments, these one or more signals originating from display device **523,** audio device **524,** keyboard **525,** and/or mouse **526,** as the case may be, may be transmitted via video interface **513,** audio interface **514,** keyboard interface **515,** and/or mouse interface **516,** respectively, to controller **502.** In the variation of FIG. 5B, the signals originating from display device **523,** audio device **524,** keyboard **525,** and/or mouse **526** may be received from remote console **522** via extender **530.** In some embodiments, based on the detected signals, controller **502** may deem display device **523,** audio device **524,** keyboard **525,** and/or mouse **526,** as the case may be, to be connected to device **500.**

In step **606,** controller **502** may perform an initial scan of the various components of console **522** to identify the operational attributes of the various components of console **522,** including power requirements and display settings, including supported resolutions and refresh rates, color depth capabilities, audio formats, and timing parameters. Controller **502** may cache these identified operational attributes of the various components of console **522,** e.g., by storing this information on memory **504.**

For example, display **523** operational attributes may include the EDID information of the actual display, including supported resolutions, refresh rates, color depths, and timing parameters. In some embodiments, device **500** detects EDID settings of display **523.** For example, device **500** may read the EDID data from display **523,** e.g., via the relevant pins in the video interface. In some embodiments, this process may be a one-time EDID capture process performed upon initial connection. In some embodiments, device **500** may include a physical user-operated button configured to initiate the one-time acquisition of the EDID. In some embodiments, device **500** then parses and validates the EDID data, and stores in memory **504.**

For example, audio device **524** operational attributes may include sample rates and number of channels.

For example, keyboard **525** operational attributes may include USB descriptor information (vendor ID, product ID, capabilities), polling rate (typically 125Hz to 1000Hz for gaming keyboards), key rollover capability (6KRG, NKRO), scan code timing and bounce characteristics, special function keys and media controls, and/or backlight control protocols if applicable.

For mouse **526** operational attributes may include polling rate (125Hz to 8000Hz for high-end gaming mice), DPI settings and switching behavior, number of buttons and their mappings, acceleration curves and sensor characteristics, and/or scroll wheel resolution and behavior.

In step **608,** controller **502** may initiate a configuration process (handshaking) of the USB-C connections to host computers **520, 521** over the configuration channels (CC1 and CC2), to determine functional parameters of the connection to permit transmission of:
- Video and audio signals from a selected one of host computers **520, 521** to display device **523** and/or audio device **524.**
- Peripheral control commands from keyboard **525** and/or mouse **526,** via keyboard interface **515** and/or mouse interface **516 and** USB-C interfaces **506, 507,** respectively, to a selected one of host computers **520, 521.**

In some embodiments, the configuration process of the USB-C connections to host computers **520, 521** may include ensuring that the USB-C connections are able to handle the aggregate bandwidth requirements of all simulated peripherals. In addition, , the configuration process of the USB-C connections to host computers **520, 521** may include providing all peripheral devices descriptors and operational attributes.

In some embodiments, controller **502** may be configured to simulate the various components of console **522** to host computers **520, 521,** based, at least in part, on predetermined parameters that are hard-coded and stored within device **500,** e.g., on memory **504.** In some embodiments, the hard-coded parameters stored by device **500** may be protected from access and/or modification by users or any malicious attack.

In some embodiments, controller **502** may be configured to simulate the various components of console **522** to host computers **520, 521,** based, at least in part, on the operational and/or functional requirements and attributes associated with display device **523,** audio device **524,** keyboard **525,** and/or mouse **526,** as determined by controller **502** in step **606.**

In some embodiments, controller **502** may be configured to simulate the various components of console **522** to host computers **520, 521,** based, at least in part, on the both predetermined parameters that are hard-coded and stored within device **500,** e.g., on memory **504,** and the operational and/or functional requirements and parameters associated with display device **523,** audio device **524,** keyboard **525,** and/or mouse **526,** as determined by controller **502** in step **606.**

In some embodiments, controller **502** configures the USB-C connection to host computers **520, 521,** including by determining at least the following functional parameters:
- Connection detection and USB-C connector orientation.
- USB power delivery (USB-PD) protocol negotiation with respect to power requirements.
- DisplayPort Alternate Mode negotiation, including DisplayPort settings and data lanes configuration.
- Audio device configuration, including audio format (sample rate, bit depth, channels).
- Keyboard configuration.
- Mouse configuration.

In some embodiments, the configuration of the USB-C connection to host computers **520, 521** may include determining power parameters for powering device **500** via the USB-C connection and/or for charging a rechargeable battery of device **500.** The parameters for powering device **500** may include, but are not limited to, voltage, maximum current consumption, and the identities of the power source and the power sink.

At the conclusion of step **608,** device **500** is connected to host computers **520, 521** via a USB-C interface, wherein device **500** simulates display device **523,** audio device **524,** keyboard **525,** and/or mouse **526.**

In some embodiments, controller **502** configures the USB-C connection to host computers **520, 521** so as to enter a desired alt-mode communication standard of the USB-C protocol, such as DisplayPort. First, controller **502** may initiate the alt-mode of the USB-C connection is initiated through USB-PD over the configuration channel CC1/CC2CC lines. Once alt-mode is initiated, controller **502** may initiate the DisplayPort link negotiation process begins over the sideband use channel signals SBU1/SBU2 using DP-AUX protocol, as defined by the VESA DisplayPort over USB Type-C specification. In some embodiments, the negotiation process includes data transmission configuration (e.g., transmission speed and quality), display device requirements (EDID), and the like, as defined by the VESA DisplayPort main specification.

This configuration process is carried out by controller **502,** simulating a sink device, with host computers **520, 521** to establish communication link according to a desired interface standard, such as DisplayPort. The specific steps in the configuration process handshaking process by controller **502** are determined by the specific interface standard selected, as is well known in the art.

In step **610,** controller **502** may optionally determine one or more processing operations to be applied to the video data transmitted from host computers **520, 521** over the initiated alt-mode protocol. For example, controller **502** may operate signal processor **508** to process the video data transmission in any desired or suitable manner, such as by converting the DisplayPort protocol data to HDMI protocol data, or to any other suitable video protocol.

In step **612,** controller **502** initiates control of a selected one of host computers **520, 521** (e.g., based on user selection) via user console 522 comprising display device **523,** audio device **524,** keyboard **525,** and/or mouse **526.**

In some embodiments, controller **502** initiates control of a selected one of host computers **520, 521** (e.g., based on user selection) by transmitting peripheral control commands from keyboard **525** and/or mouse **526,** via keyboard interface 515 and/or mouse interface **516,** respectively, and a respective one of USB-C interfaces **506, 507.**

In some embodiments, controller **502** initiates video data transmission from the selected one of host computers **520, 521** via a respective one of USB-C interfaces **506, 507,** optionally signal processor **508,** and video interface **513,** to display device **523.** In some embodiments, controller **502** initiates audio transmission from the selected one of host computers **520, 521** via a respective one of USB-C interfaces **506, 507** and audio interface **514,** to audio device **524.**

While the disclosure has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings without departing from the essential scope thereof. Therefore, it is intended that the disclosed subject matter is not limited to the particular embodiment disclosed as the best mode contemplated for carrying out this invention, but only by the claims that follow.

## Claims

1. A secure KVM device, comprising:
two or more USB-C interfaces configured to connect to respective USB-C ports of two or more host computers;
a device interface configured to connect to a user console comprising a display and control peripherals; and
a controller,
wherein said controller is configured to identify the operational attributes of said display and control peripherals,
wherein said controller is configured to initiate, based on user selection, control by said user console of a selected host computer of said two or more host computers,
wherein said controller is configured to perform a configuration process of a USB-C connection with said selected host computer, to determine operational parameters of said USB-C connection, based, at least in part, on said identified operational attributes of said display and control peripherals,
wherein based, at least in part, on said configuration process, said secure KVM device is configured to transmit control commands received from said control peripherals via said device interface, to said selected host computer over said USB-C connection, while enforcing unidirectionality which prevents transmission of data from said selected host computer to said control peripherals, and
wherein based, at least in part, on said configuration process, said secure KVM device is configured to transmit a video signal received from said selected host computer via said USB-C connection, to said display via said device interface, while enforcing unidirectionality which prevents transmission of data from said display to said selected host computer.

2. The secure KVM device of claim 1, wherein said secure KVM device is configured to simulate said display and control peripherals to said selected host computer, based, at least in part, on said identified operational attributes of said display and control peripherals.

3. The secure KVM device of claim 1, wherein said configuration process of said USB-C connection configures said USB-C connection to handle at least the following protocols simultaneously: (i) DisplayPort Alt Mode protocol for said transmitting of said video signal from said selected host computer to said display, and (ii) USB data channels for said transmitting of said control commands from said control peripherals to said selected host computer.

4. The secure KVM device of claim 1, wherein said configuration process of said USB-C connection comprises at least: (i) connection detection and determination of USB-C connector orientation, (ii) power delivery protocol negotiation with respect to power requirements, and (iii) USB-C Alternate Mode negotiation including DisplayPort settings and data lanes configuration.

5. The secure KVM device of claim 4, wherein said DisplayPort settings comprise Extended Display Identification Data (EDID) information of said display, comprising resolution, refresh rates, color depth, and/or supported timing.

6. The secure KVM device of claim 1, further comprising a memory storage, wherein said controller is configured to store said identified operational attributes of said display and control peripherals in said memory storage.

7. The secure KVM device of claim 1, wherein said user console further comprises an audio device, and wherein said secure KVM device is configured to transmit an audio signal received from said selected host computer over said USB-C connection, to said audio device via said device interface, while enforcing unidirectionality which prevents transmission of data from said audio device to said selected host computer.

8. The secure KVM device of claim 1, wherein said user console is connected to said secure KVM device via an extender comprising a downstream data channel for said video signal and an upstream data channel for said control commands.

9. A method comprising:
providing a secure KVM device comprising:
two or more USB-C interfaces configured to connect to respective USB-C ports of two or more host computers,
a device interface configured to connect to a user console comprising a display and control peripherals, and
a controller;
connecting said two or more USB-C interfaces to said respective USB-C ports of said two or more host computers;
connecting said user console to said device interface;
identifying, by said controller, operational attributes of said display and control peripherals;
initiating, by said controller, based on user selection, control by said user console of a selected host computer of said two or more host computers;
performing, by said controller, a configuration process of a USB-C connection with said selected host computer, to determine operational parameters of said USB-C connection, based, at least in part, on said identified operational attributes of said display and control peripherals;
transmitting by said secure KVM device control commands received from said control peripherals via said device interface, to said selected host computer over said USB-C connection, while enforcing unidirectionality which prevents transmission of data from said selected host computer to said control peripherals; and
transmitting by said secure KVM device a video signal received from said selected host computer via said USB-C connection, to said display via said device interface, while enforcing unidirectionality which prevents transmission of data from said display to said selected host computer.

10. The method of claim 9, wherein said secure KVM device is configured to simulate said display and control peripherals to said selected host computer, based, at least in part, on said identified operational attributes of said display and control peripherals.

11. The method of claim 9, wherein said configuration process of said USB-C connection configures said USB-C connection to handle at least the following protocols simultaneously: (i) DisplayPort Alt Mode protocol for said transmitting of said video signal from said selected host computer to said display, and (ii) USB data channels for said transmitting of said control commands from said control peripherals to said selected host computer.

12. The method of claim 9, wherein said configuration process of said USB-C connection comprises at least: (i) connection detection and determination of USB-C connector orientation, (ii) power delivery protocol negotiation with respect to power requirements, and (iii) USB-C Alternate Mode negotiation including DisplayPort settings and data lanes configuration.

13. The method of claim 12, wherein said DisplayPort settings comprise Extended Display Identification Data (EDID) information of said display, comprising resolution, refresh rates, color depth, and/or supported timing.

14. The method of claim 9, wherein said user console further comprises an audio device, said method further comprising transmitting by said secure KVM device an audio signal received from said selected host computer over said USB-C connection, to said audio device via said device interface, while enforcing unidirectionality which prevents transmission of data from said audio device to said selected host computer.

15. The method of claim 9, wherein said device interface comprises at least a video interface and one control peripheral interface, said method further comprising connecting said display to said video interface and connecting at least a first one of said control peripherals to said control peripheral interface.
